# EUROPÄISCHE PATENTSCHRIFT

(11) **EP 2 393 762 B1**
(45) Veröffentlichungstag und Bekanntmachung des Hinweises auf die Patenterteilung: **08.12.2021**
(21) Anmeldenummer: 10700237.0
(22) Anmeldetag: 11.01.2010
(51) Int. Cl.: C04B 41/49, C09D 183/04

(54) **FLUORFREIE ZUSAMMENSETZUNG ZUR WASSERABWEISENDEN BESCHICHTUNG VON OBERFLÄCHEN MIT VERBESSERTEN ABPERLEIGENSCHAFTEN**
FLUORINE-FREE COMPOSITION FOR WATER-REPELLENT COATING OF SURFACES HAVING IMPROVED BEADING PROPERTIES
COMPOSITION EXEMPTE DE FLUOR POUR REVÊTEMENT HYDROPHOBE DE SURFACES À PROPRIÉTÉS DÉPERLANTES AMÉLIORÉES

(30) Priorität: 04.02.2009 DE 102009000614
(43) Veröffentlichungstag der Anmeldung: 14.12.2011
(73) Patentinhaber: Evonik Operations GmbH, 45128 Essen (DE)
(72) Erfinder: FRIEDEL, Manuel, CH-8048 Zürich (CH); LJESIC, Spomenko, 79618 Rheinfelden (DE)
(74) Vertreter: Evonik Patent Association
(86) Internationale Anmeldenummer: PCT/EP2010/050207
(87) Internationale Veröffentlichungsnummer: WO 2010/089166

(56) Entgegenhaltungen:
- EP-A1- 0 412 516
- EP-A2- 1 205 505
- DE-A1-102005 004 871
- US-A1- 2006 235 143
- US-A1- 2008 268 233
- US-B1- 6 635 735
- DATABASE WPI Week 200882 Thomson Scientific, London, GB; AN 2008-O11906 XP002572831 & JP 2008 291225 A (SUMITOMO SEIKA CHEM CO LTD) 4. Dezember 2008 (2008-12-04)
- None

## Beschreibung

Die vorliegende Erfindung betrifft eine Zusammensetzung auf der Basis von Alkylalkoxysilanen und/oder Alkylalkoxysiloxanen zur Hydrophobierung von porösen mineralischen Substraten und zur Ausstattung von porösen mineralischen Substraten mit Abperleigenschaften, deren Herstellung und deren Verwendung für den Schutz von Bauten. Alkylalkoxysilane und -siloxane werden nachfolgend auch kurz als hydrophobierender Wirkstoff oder als Silansysteme, oligomere Silansysteme bzw. Silanoligomere bezeichnet.

Es ist lange bekannt, dass Alkylketten tragende Silanverbindungen hydrophobierende Eigenschaften auf porösen mineralischen Stoffen erzeugen können. So zeichnen sich insbesondere monomere, kürzerkettige Alkylalkoxysilane durch eine gute Tiefenimprägnierung aus (EP 0 101 816).

Oligomere Silansysteme, wie Alkylalkoxysiloxane, haben Vorteile hinsichtlich ihrer Verwendung als Hydrophobiermittel, da sie bei der Anwendung weniger flüchtige organische Verbindungen (VOC) freisetzen als monomere Silansysteme.

Ferner ist bekannt Bautenschutzmittel in Form einer Lösung oder einer flüssigen oder pastösen bzw. cremeartigen, d. h. hochviskosen Emulsion anzuwenden (u. a. EP 0 814 110, EP 1 205 481, EP 1 205 505, WO 06/081891).

Ein von Anwendern häufig gewünschtes Qualitätsmerkmal von Hydrophobierungen ist das Abperlen von Wassertropfen auf der Oberfläche eines hydrophobierten Substrats (kurz Abperleffekt genannt). Solche Wasserabperleffekte können zusätzlich das Anwachsen von Mikroorganismen, wie Algen, Moosen oder Pilzen, reduzieren helfen.

Leider verhindern zuvor genannte Bautenschutzmittel nach Applikation auf einem porösen mineralischen Substrat zwar das Eindringen von Wasser (Hydrophobierung), jedoch werden dabei meist keine oder nur sehr schwach ausgeprägte Abperleigenschaften erzielt.

Aus US 4,846,886, US 5,674,967, JP 2006-335969 und EP 0 826 650 sind jeweils silan- oder siloxanhaltige Formulierungen bekannt, die solche Abperleffekte auf porösen, mineralischen Oberflächen erzeugen können. Allerdings werden ausreichend starke Abperleffekte nur durch den Einsatz von fluorhaltigen Verbindungen erzielt. Fluorierte organische Verbindungen sind teuer und es gibt ein verstärktes ökologisches Interesse, diese zu ersetzen (J. M. Conder et al. Environmental Science Technology, 2008, 42(4), 995-1003. K. S. Kumar Research Journal of Chemistry and Environment, 2005, 9(3), 50-79.).

Weiterhin ist aus der Literatur bekannt, dass man durch den Einsatz von Kieselsäuren oder allgemeiner durch den Einsatz von oxidischen Nanopartikeln zur Oberflächenmodifizierung starke Wasserabperleffekte erzielen kann. Entsprechende Beschichtungen werden z. B. in JP 2002-338943 oder WO 2008/106494 beschrieben. In JP 2008-031275 werden wässrige Emulsionen von Silansystemen beschrieben, denen hydrophile Metalloxide zugegeben werden, um das Wasserabperlverhalten zu verbessern. Der Nachteil beim Einsatz solcher hydrophiler Metalloxide ist, dass das Wasserabweisungsvermögen einer Oberfläche durch die eingebrachte Hydrophilie negativ beeinträchtigt werden kann.

Die JP 2008-291225 betrifft wasserabweisende Zubereitungen umfassend organische Bentonite und Alkylalkoxysilane bzw. deren Kondensate.

Die Herstellung und Eigenschaften von hydrophoben Metalloxiden und insbesondere Kieselsäuren werden z.B. in JP 2007-161510, DE 10 2004 010 756 oder DE 10 2004 055 585 beschrieben.

Der vorliegenden Erfindung lag die Aufgabe zurunde, eine fluorfreie Formulierung bereitzustellen, mit der poröse mineralische Oberflächen bzw. Substrate hydrophobierend behandelt werden können und mit einem verbesserten Wasserabperleffekt ausgestattet werden können. So sollen sowohl die Reduktion der Wasseraufnahme von hydrophobierenden Wirkstoffen erhalten, als auch die ansonsten vor allem durch Fluorgruppen erzielbaren Wasserabperleffekte ("Teflon-Effekt") erreicht werden.

Die gestellte Aufgabe wird erfindungsgemäß entsprechend den Angaben in den Patentansprüchen gelöst.

Überraschenderweise wurde nun gefunden, dass durch Einbringen einer hydrophoben bzw. hydrophobierten Kieselsäure in einen hydrophobierenden Wirkstoff die gewünschten Eigenschaften erzielt werden. Die Maßnahme ist überraschend einfach, kostengünstig und trotzdem wirkungsvoll, wobei in vorteilhafter Weise bei Applikation einer erfindungsgemäßen Zusammensetzung, die auf mindestens einem hydrophobierenden Wirkstoff und mindestens einem darin eingebrachten hydrophobierten Metalloxid basiert, auf einer porösen mineralischen Oberfläche bzw. Substrat eine ausgezeichnete Hydrophobierung und gleichzeitig ein hervorragender, im Vergleich mit anderen fluorfreien Hydrophobierungssystemen deutlich verbesserter Abperleffekt erzielt werden konnte. Darüber hinaus erreicht man durch die erfindungsgemäße Lehre Abperleffekte, die der Qualität bekannter fluorhaltiger Behandlungssysteme zumindest gleichkommen oder diese gar übertreffen.

Hydrophobierende Wirkstoffe bzw. hydrophobierende Reagenzien sind im Sinne der vorliegenden Anmeldung Substanzen, die bei Applikation auf einem mineralischen Substrat eine Hydrophobierung des Substrats bzw. eine Hydrophobierung auf dessen Oberflächen bewirken.

Gegenstand der vorliegenden Erfindung ist somit eine fluorfreie Zusammensetzung zur Hydrophobierung poröser mineralischer Substrate und zur Erzeugung eines Abperleffekts auf der Oberfläche des Substrats, wobei die Zusammensetzung auf
- mindestens einem hydrophobierenden Wirkstoff und
- mindestens einem hydrophoben Metalloxid basiert.

Als weitere Bestandteile kann eine erfindungsgemäße Zusammensetzung
- optional mindestens ein organisches Lösemittel,
- optional Wasser,
- optional mindestens einen Emulgator und/oder
- optional weitere Hilfsstoffe enthalten.

Bei einer erfindungsgemäßen Zusammensetzung handelt es sich vorzugsweise um eine lösemittelfreie Zusammensetzung.

Eine erfindungsgemäße Zusammensetzung kann als hydrophobierenden Wirkstoff vorteilhaft ein oder mehrere alkylsubstituierte Silane der allgemeinen Formel I enthalten 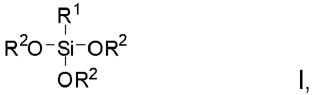 worin R¹ für eine C₁-C₁₈-Alkyl-Gruppe steht, Gruppen R² gleich oder verschieden sind und R² ein Wasserstoffatom oder einen Alkylrest mit 1 bis 6 Kohlenstoffatomen, vorzugsweise Methyl oder Ethyl, darstellt. Bevorzugte Beispiele sind solche mit Resten:
R¹ = CH₃-, C₂H₅-, C₃H₇-, C₄H₉-, i-C₄H₉-, C₆H₁₃-, i-C₆H₁₃, C₈H₁₆-, i-C₈H₁₆- und
R² = H, Methyl- oder Ethyl-.

Schließlich kann ein hydrophobierender Wirkstoff ausgewählt sein aus der Reihe der Alkylsilicate der allgemeinen, idealisierten Formel III 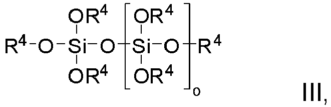 worin R⁴ unabhängig voneinander für ein Wasserstoffatom oder einen Alkylrest mit 1 bis 6 Kohlenstoffatomen, vorzugsweise mit 1 oder 2 Kohlenstoffatomen, d. h. Methyl oder Ethyl, steht und o eine Zahl von 0 bis 50 (einschließlich aller dazwischen liegender Zahlen), bevorzugt zwischen 1 und 10, ist.

Darüber hinaus können Mischungen aus zuvor genannten hydrophobierenden Wirkstoffen der allgemeinen Formeln I und III verwendet werden. Dabei kann jeder der hydrophobierenden Wirkstoffe I und III unabhängig voneinander von 0 bis 100 % (einschließlich aller dazwischen liegender Zahlen) der Gesamtmenge an hydrophobierendem Wirkstoff ausmachen.

Eine erfindungsgemäße Zusammensetzung enthält ein oder mehrere hydrophobe Metalloxide. Metalloxide im Sinne der vorliegenden Erfindung können Oxide, Hydroxide oder Oxidhydrate der Elemente Aluminium, Silizium und Titan sein. Bevorzugt werden Kieselsäuren, wie Flammkieselsäuren, Fällungskieselsäuren, kristalline Kieselsäuren oder Zeolithe eingesetzt. Erfindungsgemäß eingesetzte hydrophobe Metalloxide sind insbesondere pulverförmige Feststoffe; der Einsatz in flüssiger Form, beispielsweise als Sol, wie Kieselsäuresol, wird ausgeschlossen. Geeignete hydrophobe Metalloxide werden erhalten, wenn man besagte Metalloxide mit einem hydrophobierenden Reagenz behandelt. Die Behandlung kann beispielsweise durch Benetzen (Mischen, Kneten, Mahlen, Tauchen, Fluten) besagter Metalloxide mit dem hydrophobierenden Reagenz und einer anschließenden thermischen Nachbehandlung, beispielsweise in einem Trockenschrank, erfolgen. Man kann die Behandlung aber auch durch Besprühen der Metalloxide mit einem hydrophobierenden Reagenz, gegebenenfalls unter Einfluss einer höheren Temperatur und gegebenenfalls in Dampfform, vornehmen. Auch kann eine Mahlung und/oder Sichtung der Pulver vorangehend oder nachfolgend durchgeführt werden. Als hydrophobierende Reagenzien werden dabei Alkylalkoxysilane, wie Methyltrimethoxysilan, Ethyltrimethoxysilan, Propyltrimethoxysilan, Butyltrimethoxysilan, Octyltrimethoxysilan, Hexadecyltrimethoxysilan, Methyltriethoxysilan, Ethyltriethoxysilan, Propyltriethoxysilan, Butyltriethoxysilan, Octyltriethoxysilan, Hexadecyltriethoxysilan - um nur einige zu nennen -, Alkylalkoxysiloxane, beispielsweise Propyl- oder Octyl-funktionelle Methoxy- bzw. ethoxysiloxane, wie sie u. a. EP 0 814 110, EP 1 205 481, EP 1 205 505 zu entnehmen sind, oder Silikone, Wachse oder Öle verwendet. Solcherart behandelte Metalloxide werden im Sinne der vorliegenden Erfindung als hydrophobierte Metalloxide bezeichnet.

Die durchschnittliche Partikelgröße erfindungsgemäß eingesetzter hydrophober Metalloxide beträgt vorteilhaft 1 bis 300 nm (einschließlich aller dazwischen liegender Zahlen), vorzugsweise 2 bis 150 nm, besonders bevorzugt 3 bis 100 nm, ganz besonders bevorzugt 4 bis 70 nm, insbesondere 5 bis 50 nm. Die durchschnittliche Partikelgröße kann beispielsweise mittels Transmissionselektronenmikroskopie (TEM) bestimmt werden.

Die spezifischen Oberflächen erfindungsgemäß eingesetzter hydrophober Metalloxide betragen vorteilhaft 20 bis 800 g/m² (einschließlich aller dazwischen liegender Zahlen), vorzugsweise 25 bis 600 g/m², besonders bevorzugt 50 bis 500 g/m², ganz besonders bevorzugt 60 bis 400 g/m², insbesondere 70 und 300 g/m². Die spezifische Oberfläche (BET) kann beispielsweise in Anlehnung an DIN 66131 bestimmt werden.

Erfindungsgemäße Zusammensetzungen besitzen vorteilhaft einen Gehalt von 0,01 bis 10 Gew.-% (einschließlich aller dazwischen liegender Zahlen) an hydrophobem Metalloxid, bevorzugt 0,01 bis 5 Gew.-%, besonders bevorzugt 0,05 bis 4 Gew.-%, insbesondere 0,1 bis 2 Gew.-%, bezogen auf die Gesamtmasse der Zusammensetzung.

Die erfindungsgemäßen Zusammensetzungen können vorliegen und verwendet werden in Substanz, gelöst in einem organischen Lösemittel, als wässrige Emulsion oder als wässrige Lösung. Die verwendbaren Formulierungen weisen vorteilhaft einen Gehalt an hydrophobierendem Wirkstoff bzw. hydropobierendem Wirkstoffgemisch von 0,5 bis 99,99 Gew.-% (einschließlich aller dazwischen liegender Zahlen), bevorzugt 5 bis 99,95 Gew.-%, besonders bevorzugt 8 bis 99,9 Gew.-%, ganz besonders bevorzugt 10 bis 75 Gew.-%, bezogen auf die Zusammensetzung, auf.

Als organische Lösemittel können erfindungsgemäß insbesondere Alkohole, wie Methanol, Ethanol oder Isopropanol, polar aprotische Lösemittel, wie Aceton, DMSO oder NMP, aliphatische oder aromatische Lösemittel, wie n-Hexan, Toluol oder Xylole, oder Mineralöle, wie Testbenzin, eingesetzt werden.

So können erfindungsgemäß Zusammensetzungen vorteilhaft einen Gehalt mindestens eines organischen Löse- oder Verdünnungsmittels aus der Reihe der aliphatischen sowie aromatischen Kohlenwasserstoffe mit einem Siedepunkt oberhalb der Raumtemperatur, vorzugsweise der C₆- bis C₁₂-Alkane, Benzin, Waschbenzin, Diesel, Kerosin, Toluol, Xylol, der Alkohole bzw. Polyole, vorzugsweise Methanol, Ethanol, Isopropanol, t-Butanol, Pentanol, Hexanol, Oktanol, Nonanol, Isononanol, Glycerin, der Ketone, vorzugsweise Aceton, oder eines Gemisches aus mindestens zwei der zuvor genannten organischen Löse- bzw. Verdünnungsmitte aufweisen.

Sofern die erfindungsgemäße Zusammensetzung in Form einer wässrigen Emulsion vorliegt, kann diese einen Gehalt mindestens eines Emulgators aufweisen, dabei kann der Emulgator vorteilhaft aus der Reihe der Alkylsulfate mit C₈-C₁₈-Alkyl, Alkyl-und Alkarylethersulfate mit C₈-C₁₈-Alkyl im hydrophoben Rest und mit 1 bis 40 Ethylenoxid (EO)- bzw. Propylenoxid (PO)-Einheiten, Alkylsulfonate mit C₈-C₁₈-Alkyl, Alkarylsulfonate mit C₈-C₁₈-Alkyl, Halbester der Sulfobernsteinsäure mit einwertigen Alkoholen oder Alkylphenolen mit 5 bis 15 Kohlenstoffatomen, Alkali- und Ammoniumsalze von Carbonsäuren mit 8 bis 20 Kohlenstoffatomen im Alkyl-, Aryl-, Alkaryl- oder Aralkylrest, Alkyl- und Alkarylphosphate mit 8 bis 20 Kohlenstoffatomen im organischen Rest, Alkylether- bzw. Alkaryletherphosphate mit 8 bis 20 Kohlenstoffatomen im Alkyl- bzw. Alkarylrest und 1 bis 40 EO-Einheiten, Alkylpolyglykolether und Alkarylpolyglykolether mit 8 bis 40 EO-Einheiten und C₈-C₂₀-Kohlenstoffatomen in den Alkyl- oder Arylresten, Ethylenoxid/Propylenoxid (EO/PO)-Blockcopolymer mit 8 bis 40 EO- bzw. PO-Einheiten, Additionsprodukte von Alkylaminen mit C₈-C₂₂-Alkylresten mit Ethylenoxid oder Propylenoxid, Alkylpolyglykoside mit linearen oder verzweigten gesättigten oder ungesättigten C₈-C₂₄-Alkylresten und Oligoglykosidresten mit 1 bis 10 Hexose- oder Pentoseeinheiten, siliciumfunktionelle Tenside oder Mischungen dieser Emulgatoren ausgewählt sein.

Der Gehalt an Emulgator in einer erfindungsgemäßen Zusammensetzung beträgt vorzugsweise 0,01 bis 5 Gew.-%, besonders bevorzugt 0,05 bis 4 Gew.-% (einschließlich aller dazwischen liegender Zahlen), bezogen auf das Gesamtgewicht der Emulsion.

Weiter weisen erfindungsgemäße Zusammensetzungen einen Gehalt mindestens eines Hydrolyse- bzw. Kondensationskatalysators aus der Reihe der Komplexverbindungen, wie Halogenide, Oxide, Hydroxide, Imide, Alkoholate, Amide, Thiolate, Carboxylate und/oder Kombinationen dieser Substituenten, von Elementen der 3. und 4. Hauptgruppe des Periodensystems der Elemente (PSE) sowie der Nebengruppen II, III, IV, V, VI, VII und VIIIa, Vlllb und Vlllc des PSE, insbesondere Titanate oder Zirkonate, wie beispielsweise Tetra-n-butylorthotitanat oder Tetra-n-propylorthozirkonat auf. Außerdem können als Katalysator Oxide, Hydroxide, Hydrogenphosphate, Hydrogensulfate, Sulfide, Hydrogensulfide, Carbonate oder Hydrogencarbonate der 1. und 2. Hauptgruppe des PSE und/oder Alkoholate, vorzugsweise Natriummethanolat oder Natriumethanolat und/oder Aminoalkohole, vorzugsweise 2-Aminoethanol oder 2-(N,N-dimethyl)aminoethanol enthalten sein. Darüber hinaus können auch Carbonsäuren, wie Ameisensäure, Essigsäure oder Propionsäure, sowie Mineralsäuren, wie Salzsäure oder Phosphorsäure, oder ein Gemisch aus mindestens zwei der genannten Katalysatoren als Hydrolyse- bzw. Kondensationskatalysator vorteilhaft eingesetzt werden.

Die erwähnten Hydrolyse- bzw. Kondensationskatalysatoren können vorteilhaft in einer Menge von 0,05 bis 5 Gew.-% (einschließlich aller dazwischen liegender Zahlen), bevorzugt 0,1 bis 2 Gew.-%, ganz besonders bevorzugt 0,2 bis 1,8 Gew.-%, bezogen auf die Menge an eingesetztem hydrophobierendem Wirkstoff, eingesetzt werden.

Darüber hinaus kann eine erfindungsgemäße Zusammensetzung vorteilhaft einen Gehalt an mindestens einem weiteren Hilfsstoff, ausgewählt aus der Reihe anorganischen oder organischen Säuren, Puffersubstanzen, Fungiziden, Bakteriziden, Algiziden, Mikrobioziden, Geruchsstoffen, Korrosionsinhibitoren, Konservierungsmittel, Rheologiehilfsmittel, aufweisen.

Darüber hinaus kann man erfindungsgemäßen Zusammensetzungen als weiteres Hilfsmittel auch ein oder mehrere nicht hydrophobierte Metalloxide neben einem oder mehreren der beschriebenen Hydrolyse- oder Kondensationskatalysatoren zusetzen, wodurch man vorteilhaft eine noch größere Abriebbeständigkeit des Abperleffektes erzielen kann.

Die Zubereitung erfindungsgemäßer Zusammensetzungen kann vorteilhaft durch einfaches Mischen der einzelnen Komponenten in einem Behältnis mit geeignetem Mischaggregat erfolgen. Dieses Mischen kann kontinuierlich, z. B. durch Verwendung eines Mischrohres, oder diskontinuierlich erfolgen.

Die Herstellung einer wässrigen Emulsion ist aus technischer Sicht beispielsweise in WO 06/081892 sowie WO 06/081891 ausführlich beschrieben. Dabei kann man vorteilhaft eine erfindungsgemäße Zusammensetzung aus mindestens einem hydrophobierenden Wirkstoff und mindestens einem hydrophoben Metalloxid als Ölphase einsetzen.

So kann man erfindungsgemäße Zusammensetzungen vorteilhaft herstellen, indem man die besagten Bestandteile nacheinander in ein geeignetes Behältnis dosiert und durch mischen homogenisiert.

Gegenstand der vorliegenden Erfindung ist somit ein Verfahren zur Herstellung einer erfindungsgemäßen Zusammensetzung, indem man
- den mindestens einen hydrophobierenden Wirkstoff und
- das mindestens eine hydrophobe Metalloxid in einem Mischaggregat zusammenbringt und
- mit dem mindestens einem Hydrolyse- oder Kondensationskatalysator,
- optional Wasser,
- optional mindestens einem organischen Lösemittel,
- optional mindestens einem Emulgator und
- optional mit mindestens einem weiteren Hilfsstoff
diskontinuierlich oder kontinuierlich mischt.

Weiter ist Gegenstand der vorliegenden Erfindung eine fluorfreie Zusammensetzung, die nach dem erfindungsgemäßen Verfahren erhältlich ist.

Schließlich ist Gegenstand der vorliegenden Erfindung die Verwendung einer erfindungsgemäßen fluorfreien Zusammensetzung oder einer nach dem erfindungsgemäßen Verfahren hergestellten Zusammensetzung zum Hydrophobieren von porösen mineralischen Substraten und zur Erzeugung eines Abperleffekts auf der Substratoberfläche, insbesondere von Baustoffen, wie Beton, Faserzement, Ton, Lehm, Ziegel, Marmor, Gips, auf Gips basierenden oder gipshaltigen Substraten, Granit, Sandstein oder Kalksandstein, wobei ein oder mehrere Wassertropfen, die über eine Zeit von 1 Minute auf der behandelten Substratoberfläche verbleiben, die Oberfläche praktisch nicht benetzen und so vorteilhaft keine mit dem bloßen Auge erkennbaren Benetzungsflecken hinterlassen.

Insbesondere sind mineralische Substrate, die eine geringe Nukleophilie besitzen, dies sind in der Regel solche mit einem geringen Gehalt an freien OH-Gruppen, mit bisher gängigen Mitteln nicht in ausreichendem Maße Wasser abweisend ausstattbar. Solche mineralischen Subtraten sind beispielsweise Calcium- bzw. Magnesiumcarbonat oder auf Calcium- bzw. Magnesiumcarbonat basierende Substrate, wie Kalkstein, oder Calcium- bzw. Magnesiumsulfat oder auf Calcium- bzw. Magnesiumsulfat basierende Substrate, wie Gips, und werden in der Bauindustrie häufig verwendet. Überraschenderweise eignen sich erfindungsgemäße Zusammensetzungen besonders vorteilhaft auch zur Erzeugung von hydrophobierenden Eigenschaften und von Wasserabperleffekten auf solchen Substraten bzw. entsprechenden Werkstoffen, Produkten, Artikeln, Bauteilen bzw. Erzeugnissen.

Gegenstand sind somit auch Erzeugnisse, die mit einer erfindungsgemäßen Zusammensetzung behandelt sind, insbesondere solche auf der Basis von Beton, Gips, Kalksandstein, Kalkstein.

Die Erfindung wird anhand der folgenden Beispiele näher erläutert, ohne jedoch den Gegenstand der Erfindung zu beschränken.

### Beispiele

Alle nachfolgenden Angaben in Gew.-% beziehen sich auf die Gesamtmasse der fertigen Formulierung.

### Beispiel 1 (Vergleichsbeispiel)

Bei Raumtemperatur wurde ein Alkyltrialkoxysilan (Protectosil^{®} BHN der Firma Evonik Degussa GmbH) in einem sauberen, trockenen Glasgefäß vorgelegt und mit 0,5 Gew.-% der hydrophoben Kieselsäure AEROSIL^{®} R 202 (erhältlich von der Firma Evonik Degussa GmbH) versetzt. Die entstandene Mischung wurde für weitere 5 Minuten gerührt und konnte anschließend direkt verwendet werden.

### Beispiel 2

Bei Raumtemperatur wurde Ethanol in einem sauberen, trockenen Glasgefäß vorgelegt und nacheinander mit 20 Gew.-% eines Alkyltrialkoxysilans (Protectosil^{®} BHN der Firma Evonik Degussa GmbH), 20 % eines Ethylpolysilicats (Dynasylan A der Firma Evonik Degussa GmbH), 1,5 Gew.-% eines Katalysators (Tyzor TnBT der Firma DuPont) sowie 0,5 Gew.-% der hydrophoben Kieselsäure AEROSIL^{®} R 202 (erhältlich von der Firma Evonik Degussa GmbH) versetzt. Die entstandene Mischung wurde für weitere 5 Minuten gerührt und konnte anschließend direkt verwendet werden.

### Beispiel 3 (Vergleichsbeispiel)

Bei Raumtemperatur wurde Shellsol D 60 (erhältlich bei der Firma Shell Chemicals) in einem sauberen, trockenen Glasgefäß vorgelegt und nacheinander mit 10 Gew.-% eines Alkylsiloxans (Protectosil^{®} 266 der Firma Evonik Degussa GmbH) sowie 1 Gew.-% der hydrophoben Kieselsäure AEROSIL^{®} R 972 (erhältlich von der Firma Evonik Degussa GmbH) versetzt. Die entstandene Mischung wurde für weitere 5 Minuten gerührt und konnte anschließend direkt verwendet werden.

### Beispiel 4 (Vergleichsbeispiel)

Es wurde ein reines Alkyltrialkoxysilan (Protectosil^{®} BHN der Firma Evonik Degussa GmbH) eingesetzt.

### Beispiel 5 (Vergleichsbeispiel)

Bei Raumtemperatur wurden in einem trockenen, sauberen Glasgefäß 0,5 Gew.-% der hydrophoben Kieselsäure AEROSIL^{®} R 202 (erhältlich von der Firma Evonik Degussa GmbH) in Ethanol suspendiert.

### Beispiel 6 (Vergleichsbeispiel)

Analog Beispiel 2, aber ohne den Zusatz der hydrophoben Kieselsäure AEROSIL^{®} R 202.

### Beispiel 7 (Vergleichsbeispiel)

Bei Raumtemperatur wurde eine wässrige Emulsion eines Alkylsiloxans (Protectosil^{®} WS 600 der Firma Evonik Degussa GmbH) in einem sauberen, trockenen Glasgefäß vorgelegt und mit 1 Gew.-% der hydrophilen Kieselsäure AEROSIL^{®} 200 (erhältlich von der Firma Evonik Degussa GmbH) versetzt. Die entstandene Mischung wurde für weitere 5 Minuten gerührt und konnte anschließend direkt verwendet werden.

### Auswertung der Beispiele

Die nachfolgende Tabelle 1 führt die Ergebnisse der oben angeführten Beispiele auf. Dazu wurden die gebrauchsfertigen Lösungen auf Betonplatten sowie Kalksandsteinplatten der Abmessungen 15 x 7,5 x 1 cm mit der jeweils angegebenen Auftragsmenge durch tauchen der Platten aufgebracht. Für die Bestimmung der Güte der Abperleigenschaften wurden Wassertropfen aufgesetzt und soweit nicht aufgesogen nach 1 Minute Kontaktzeit die so genannten Rand- bzw. Kontaktwinkel bestimmt. (Die Messung des Kontaktwinkels erfolgte nach DIN EN 828.) Zusätzlich wurde die Tropfen nach 10 Minuten Kontaktzeit abgewischt und die zurückbleibende Fläche beurteilt (Fleckbildung: 0 = Tropfen perlt ab, 1 = keine Benetzung, 2 = Kontaktfläche zur Hälfte benetzt, 3 = Kontaktfläche voll benetzt, 4 = dunkle Färbung der Kontaktfläche, Tropfen etwas aufgesogen, 5 = dunkle Färbung der Kontaktfläche, Tropfen zu 50 % aufgesogen, 6 = dunkle Färbung der Kontaktfläche, Tropfen ganz aufgesogen).

Die hydrophobierenden Eigenschaften werden durch die Reduktion der Wasseraufnahme der einzelnen Mischungen ausgedrückt. Dazu wurden Beton-, Kalksandstein- oder Gipsplatten der Größe 15 x 7,5 cm mit der angegebenen Menge durch Tauchen behandelt. Nach einer Abbindezeit von 2 Wochen wurden die behandelten Beton- und Kalksandsteinplatten für 24 Stunden vollständig unter Wasser gelagert. Anschließend wurde die Gewichtszunahme bestimmt. Die Reduktion der Wasseraufnahme ergibt sich im Vergleich zu einem unbehandelten Würfel.

Gipsprobekörper (Wasser/Gips-Wert = 0,5) wurden nach DIN EN 520 für 2 Stunden unter Wasser gelagert und anschließend die Gewichtszunahme in % bestimmt. Die Norm sieht eine Gewichtszunahme von < 5 % für die höchste Klasse vor.

**Tabelle 1**

| Ergebnisse der Beispiele 1 bis 7. | | | | | |
|---|---|---|---|---|---|
| Mischung aus Beispiel | Substrat | Auftragsmenge [g/m²] | Kontaktwinkel nach 1 Minute (statisch) | Fleckbildung nach 10 Minuten (Henkeltest) | Reduktion der Wasseraufnahme [%] |
| 1 | Beton | 153 | 147° | 0 | 92,5 |
| 1 | Kalksandstein | 213,3 | 145° | * | 96,2 |
| 2 | Gips | 210,3 | 145,5° | 2 | 0,54*** |
| 3 | Beton | 158 | 130° | 1-2 | 87,0 |
| 4 | Beton | 160 | ** | 4 | 89 |
| 4 | Kalksandstein | 220 | ** | 3 | 90,5 |
| 5 | Beton | 146 | 152° | * | 24,2 |
| 6 | Gips | 250 | 111° | 2-3 | 0,7%*** |
| 7 | Beton | 237 | 76° | 4 | 87,4% |

| | | | | | |
|---|---|---|---|---|---|
| *: Tropfen springt von der Oberfläche zurück, Test nicht möglich **: Vollständige Benetzung, nicht messbar ***: Die Wasseraufnahme für Gips wird analog EN 520 als Gewichtszunahme bestimmt. Unbehandelter Gips zeigt eine Gewichtszunahme von > 20%. n.b.: nicht bestimmt | | | | | |

### Schlussfolgerung

Die erfindungsgemäßen Zusammensetzungen zeigen auf Gips hervorragende Abperleigenschaften bei gleichzeitig vorhandener hervorragender hydrophobierender Wirkung (ausgedrückt als Reduktion der Wasseraufnahme, bzw. Gewichtszunahme bei Lagerung unter Wasser).

Formulierungen, denen eine der erfindungsgemäßen Komponenten fehlt, zeigen eine erhöhte Wasseraufnahme und/oder schlechtere Abperleigenschaften.

## Patentansprüche

1. Fluorfreie Zusammensetzung zur Hydrophobierung poröser mineralischer Substrate und zur Erzeugung eines Abperleffekts auf der Oberfläche des Substrats, wobei die Zusammensetzung auf
- mindestens einem hydrophobierenden Wirkstoff und
- mindestens einem hydrophoben Metalloxid basiert,
wobei
der hydrophobierende Wirkstoff ausgewählt ist
aus der Reihe alkylsubstituierter Silane der allgemeinen Formel I 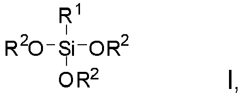
worin R¹ für eine C₁-C₁₈-Alkyl-Gruppe steht, Gruppen R² gleich oder verschieden sind und R² ein Wasserstoffatom oder einen Alkylrest mit 1 bis 6 Kohlenstoffatomen darstellt; und
aus der Reihe der Alkylsilicate der idealisierten Formel III, 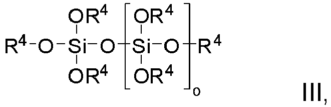
worin R⁴ unabhängig voneinander für ein Wasserstoffatom oder einen Alkylrest mit 1 bis 6 Kohlenstoffatomen steht und o eine Zahl von 0 bis 50 ist;
das hydrophobe Metalloxid erhalten wird, wenn man das Metalloxid mit einem hydrophobierenden Reagenz ausgewählt aus Alkylalkoxysilanen, Alkylalkoxysiloxanen, Silikonen, Wachsen und Ölen behandelt; und
die Zusammensetzung einen Gehalt mindestens eines Hydrolyse- bzw. Kondensationskatalysators aus der Reihe der Komplexverbindungen von Elementen der 3. und 4. Hauptgruppe des Periodensystems der Elemente (PSE) sowie der Nebengruppen II, III, IV, V, VI, VII und VIIIa, Vlllb und Vlllc des PSE, aus der Reihe der Salze von Elementen der 1. und 2. Hauptgruppe des PSE, aus der Reihe der Alkoholate, aus der Reihe der Aminoalkohole, aus der Reihe der Carbonsäuren oder Mineralsäuren oder eines Gemischs aus mindestens zwei der zuvor genannten Hydrolyse- bzw. Kondensationskatalysatoren aufweist.

2. Zusammensetzung nach Anspruch 1,
**dadurch gekennzeichnet,**
**dass** die Zusammensetzung als weitere Bestandteile
- optional mindestens ein organisches Lösemittel,
- optional Wasser,
- optional mindestens einen Emulgator und/oder
- optional weitere Hilfsstoffe enthält.

3. Zusammensetzung nach einem der Ansprüche 1 bis 2,
**dadurch gekennzeichnet,**
**dass** die Zusammensetzung auf einer Mischung hydrophobierender Wirkstoffe der idealisierten Formeln I und/oder III basiert.

4. Zusammensetzung nach einem der Ansprüche 1 bis 3,
**gekennzeichnet durch**
einen Gehalt an hydrophobierendem Wirkstoff von 0,5 bis 99,99 Gew.-%, bezogen auf die Zusammensetzung.

5. Zusammensetzung nach einem der Ansprüche 1 bis 4,
**gekennzeichnet durch**
einen Gehalt an hydrophobem Metalloxid von 0,01 bis 10 Gew.-%, bezogen auf die Zusammensetzung.

6. Zusammensetzung nach einem der Ansprüche 1 bis 5,
**gekennzeichnet durch**
einen Gehalt mindestens eines organischen Löse- oder Verdünnungsmittels aus der Reihe der aliphatischen oder aromatischen Lösemittel, der aliphatischen sowie aromatischen Kohlenwasserstoffe mit einem Siedepunkt oberhalb der Raumtemperatur, der polaren aprotischen Lösemittel, der Alkohole bzw. Polyole, der Ketone oder eines Gemischs aus mindestens zwei der zuvor genannten organischen Löse- bzw. Verdünnungsmittel.

7. Zusammensetzung nach einem der Ansprüche 1 bis 6,
**dadurch gekennzeichnet, dass**
der mindestens eines Hydrolyse- bzw. Kondensationskatalysators aus der Reihe der Titanate oder Zirkonate ausgewählt ist.

8. Zusammensetzung nach einem der Ansprüche 1 bis 7,
**gekennzeichnet durch**
einen Gehalt an Katalysator von 0,05 bis 5 Gew.-%, bezogen auf die Menge an eingesetztem hydrophobierenden Wirkstoff.

9. Zusammensetzung nach einem der Ansprüche 1 bis 8,
**gekennzeichnet durch**
einen Gehalt mindestens eines Emulgators ausgewählt aus Alkylsulfaten mit Cs-C₁₈-Alkyl, Alkyl- und Alkarylethersulfaten mit C₈-C₁₈-Alkyl im hydrophoben Rest und mit 1 bis 40 Ethylenoxid (EO)- bzw. Propylenoxid (PO)-Einheiten, Alkylsulfonate mit C₈-C₁₈-Alkyl, Alkarylsulfonate mit C₈-C₁₈-Alkyl, Halbester der Sulfobernsteinsäure mit einwertigen Alkoholen oder Alkylphenolen mit 5 bis 15 Kohlenstoffatomen, Alkali- und Ammoniumsalze von Carbonsäuren mit 8 bis 20 Kohlenstoffatomen im Alkyl-, Aryl-, Alkaryl- oder Aralkylrest, Alkyl- und Alkarylphosphate mit 8 bis 20 Kohlenstoffatomen im organischen Rest, Alkylether- bzw. Alkaryletherphosphate mit 8 bis 20 Kohlenstoffatomen im Alkyl- bzw. Alkarylrest und 1 bis 40 EO-Einheiten, Alkylpolyglykolether und Alkarylpolyglykolether mit 8 bis 40 EO-Einheiten und C₈-C₂₀-Kohlenstoffatomen in den Alkyl- oder Arylresten, Ethylenoxid/Propylenoxid (EO/PO)-Blockcopolymer mit 8 bis 40 EO- bzw. PO-Einheiten, Additionsprodukte von Alkylaminen mit C₈-C₂₂-Alkylresten mit Ethylenoxid oder Propylenoxid, Alkylpolyglykoside mit linearen oder verzweigten gesättigten oder ungesättigten C₈-C₂₄-Alkylresten und Oligoglykosidresten mit 1 bis 10 Hexose- oder Pentoseeinheiten, siliciumfunktionelle Tenside oder einer Mischung aus mindestens zwei der zuvor genannten Emulgatoren.

10. Zusammensetzung nach Anspruch 9,
**gekennzeichnet durch**
einen Gehalt an Emulgator von 0,01 bis 5 Gew.-%, bezogen auf Gesamtgewicht der Zusammensetzung.

11. Zusammensetzung nach einem der Ansprüche 1 bis 10,
**gekennzeichnet durch**
einen Gehalt an mindestens einem Hilfsstoff ausgewählt aus der Reihe anorganischer oder organischer Säuren, Puffersubstanzen, Fungiziden, Bakteriziden, Algiziden, Mikrobioziden, Geruchsstoffen, Korrosionsinhibitoren, Konservierungsmittel, Rheologiehilfsmittel.

12. Verfahren zur Herstellung einer fluorfreien Zusammensetzung nach einem der Ansprüche 1 bis 11, indem man
- mindestens einen hydrophobierenden Wirkstoff, wobei der hydrophobierende Wirkstoff ausgewählt ist
aus der Reihe alkylsubstituierter Silane der allgemeinen Formel I 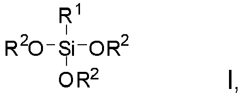
worin R¹ für eine C₁-C₁₈-Alkyl-Gruppe steht, Gruppen R² gleich oder verschieden sind und R² ein Wasserstoffatom oder einen Alkylrest mit 1 bis 6 Kohlenstoffatomen darstellt; und
aus der Reihe der Alkylsilicate der idealisierten Formel III, 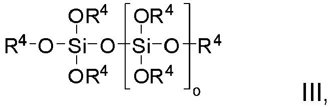 worin R⁴ unabhängig voneinander für ein Wasserstoffatom oder einen Alkylrest mit 1 bis 6 Kohlenstoffatomen steht und o eine Zahl von 0 bis 50 ist; und
- mindestens ein hydrophobes Metalloxid, wobei das hydrophobe Metalloxid erhalten wird, wenn man das Metalloxid mit einem hydrophobierenden Reagenz ausgewählt aus Alkylalkoxysilanen, Alkylalkoxysiloxanen, Silikonen, Wachsen und Ölen behandelt;
in einem Mischaggregat zusammenbringt und
- mit mindestens einem Hydrolyse- oder Kondensationskatalysator aus der Reihe der Komplexverbindungen von Elementen der 3. und 4. Hauptgruppe des Periodensystems der Elemente (PSE) sowie der Nebengruppen II, III, IV, V, VI, VII und VIIIa, Vlllb und Vlllc des PSE, aus der Reihe der Salze von Elementen der 1. und 2. Hauptgruppe des PSE, aus der Reihe der Alkoholate, aus der Reihe der Aminoalkohole, aus der Reihe der Carbonsäuren oder Mineralsäuren oder eines Gemischs aus mindestens zwei der zuvor genannten Hydrolyse- bzw. Kondensationskatalysatoren,
- optional Wasser,
- optional mindestens einem organischen Lösemittel,
- optional mindestens einem Emulgator und
- optional mindestens einem weiteren Hilfsstoff
diskontinuierlich oder kontinuierlich mischt.

13. Verwendung einer Zusammensetzung nach einem der Ansprüche 1 bis 11 oder einer nach dem Verfahren gemäß Anspruch 12 hergestellten Zusammensetzung zum Hydrophobieren von porösen mineralischen Substraten und zur Erzeugen eines Abperleffekts auf der behandelten Substratoberfläche, wobei ein oder mehrere Wassertropfen, die über eine Zeit von 1 Minute auf der behandelten Substratoberfläche verbleiben, keine Benetzungsflecken hinterlassen.

## Claims

1. Fluorine-free composition for hydrophobizing a porous mineral substrate and for producing a water repellent effect on the surface of the substrate, the composition being based on
- at least one hydrophobizing active substance and
- at least one hydrophobic metal oxide,
wherein
the hydrophobizing active substance is selected from the group of alkyl-substituted silanes of the general formula I 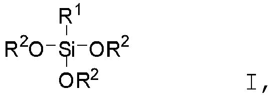
in which R¹ represents a C₁-C₁₈-alkyl group, groups R² are identical or different and R² represents a hydrogen atom or an alkyl radical having 1 to 6 carbon atoms; and
from the group of the alkyl silicates of the idealized formula III 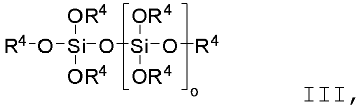
in which R⁴, independently of one another, represents a hydrogen atom or an alkyl radical having 1 to 6 carbon atoms and o is a number from 0 to 50;
the hydrophobizing metal oxide is obtained when the metal oxide is treated with a hydrophobizing reagent selected from alkylalkoxysilanes, alkylalkoxy-siloxanes, silicones, waxes and oils; and
the composition has a content of at least one hydrolysis or condensation catalyst from the group of the complexes of elements of the 3rd and 4th main group of the Periodic Table of the Elements (PTE) and of transition groups II, III, IV, V, VI, VII and VIIIa, VIIIb and VIIIc of the PTE, from the group of the salts of elements of the 1st and 2nd main group of the PTE, from the group of the alkoxides, from the group of the amino alcohols, from the group of the carboxylic acids or mineral acids or a mixture of at least two of the abovementioned hydrolysis or condensation catalysts.

2. Composition according to Claim 1,
**characterized in that**
the composition contains, as further constituents,
- optionally at least one organic solvent,
- optionally water,
- optionally at least one emulsifier and/or
- optionally further auxiliaries.

3. Composition according to either of Claims 1 and 2,
**characterized in that**
the composition is based on a mixture of hydrophobizing active substances of the idealized formulae I and/or III.

4. Composition according to any of Claims 1 to 3,
**characterized by**
a content of hydrophobizing active substance of 0.5 to 99.99% by weight, based on the composition.

5. Composition according to any of Claims 1 to 4,
**characterized by**
a content of hydrophobic metal oxide of 0.01 to 10% by weight, based on the composition.

6. Composition according to any of Claims 1 to 5,
**characterized by**
a content of at least one organic solvent or diluent from the group of the aliphatic or aromatic solvents, the aliphatic and aromatic hydrocarbons having a boiling point above room temperature, the polar aprotic solvents, the alcohols or polyols, the ketones or a mixture of at least two of the abovementioned organic solvents or diluents.

7. Composition according to any of Claims 1 to 6,
**characterized in that**
the at least one hydrolysis or condensation catalyst is selected from the group of the titanates or zirconates.

8. Composition according to any of Claims 1 to 7,
**characterized by**
a catalyst content of 0.05 to 5% by weight, based on the amount of hydrophobizing active substance used.

9. Composition according to any of Claims 1 to 8,
**characterized**
**by** a content of at least one emulsifier selected from alkylsulfates having C₈-C₁₈-alkyl, alkyl and alkaryl ether sulfates having C₈-C₁₈-alkyl in the hydrophobic radical and having 1 to 40 ethylene oxide (EO) or propylene oxide (PO) units, alkylsulfonates having C₈-C₁₈-alkyl, alkarylsulfonates having C₈-C₁₈-alkyl, monoesters of sulfosuccinic acid with monohydric alcohols or alkylphenols having 5 to 15 carbon atoms, alkali metal and ammonium salts of carboxylic acids having 8 to 20 carbon atoms in the alkyl, aryl, alkaryl or aralkyl radical, alkyl and alkaryl phosphates having 8 to 20 carbon atoms in the organic radical, alkyl ether or alkaryl ether phosphates having 8 to 20 carbon atoms in the alkyl or alkaryl radical and 1 to 40 EO units, alkylpolyglycol ethers and alkarylpolyglycol ethers having 8 to 40 EO units and C₈-C₂₀-carbon atoms in the alkyl or aryl radicals, ethylene oxide/propylene oxide (EO/PO) block copolymer having 8 to 40 EO and PO units, adducts of alkylamines having C₈-C₂₂-alkyl radicals with ethylene oxide or propylene oxide, alkylpolyglycosides having linear or branched saturated or unsaturated C₈-C₂₄-alkyl radicals and oligoglycoside radicals having 1 to 10 hexose or pentose units, silicon-functional surfactants or a mixture of at least two of the abovementioned emulsifiers.

10. Composition according to Claim 9,
**characterized by**
an emulsifier content of 0.01 to 5% by weight, based on the total weight of the composition.

11. Composition according to any of Claims 1 to 10,
**characterized by**
a content of at least one auxiliary selected from the group of inorganic or organic acids, buffer substances, fungicides, bactericides, algicides, microbicides, odorous substances, corrosion inhibitors, preservatives, rheology auxiliaries.

12. Process for the preparation of a fluorine-free composition according to any of Claims 1 to 11, by combining
- at least one hydrophobizing active substance, wherein the hydrophobic active substance is selected from
the group of alkyl-substituted silanes of the general formula I 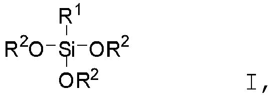
in which R¹ represents a C₁-C₁₈-alkyl group, groups R² are identical or different and R² represents a hydrogen atom or an alkyl radical having 1 to 6 carbon atoms; and
from the group of the alkyl silicates of the idealized formula III 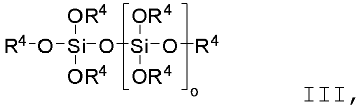 in which R⁴, independently of one another, represents a hydrogen atom or an alkyl radical having 1 to 6 carbon atoms and o is a number from 0 to 50; and
- at least one hydrophobic metal oxide, wherein the hydrophobic metal oxide is obtained when the metal oxide is treated with a hydrophobizing reagent selected from alkylalkoxysilanes, alkylalkoxy-siloxanes, silicones, waxes and oils,
in a mixing unit and
mixing them batchwise or continuously
- with at least one hydrolysis or condensation catalyst from the group of the complexes of elements of the 3rd and 4th main group of the Periodic Table of the Elements (PTE) and of transition groups II, III, IV, V, VI, VII and VIIIa, VIIIb and VIIIc of the PTE, from the group of the salts of elements of the 1st and 2nd main group of the PTE, from the group of the alkoxides, from the group of the amino alcohols, from the group of the carboxylic acids or mineral acids or a mixture of at least two of the abovementioned hydrolysis or condensation catalysts,
- optionally water,
- optionally at least one organic solvent,
- optionally at least one emulsifier and
- optionally at least one further auxiliary.

13. Use of a composition according to any of Claims 1 to 11 or of a composition prepared by the process according to Claim 12 for hydrophobizing porous mineral substrates and for producing a water repellent effect on the treated substrate surface, in that one or more water drops which remain on the treated substrate surface over a time of 1 minute leave behind no spots due to wetting.

## Revendications

1. Composition exempte de fluor pour hydrofuger des substrats minéraux poreux et pour générer un effet perlant à la surface du substrat, la composition étant à base
- d'au moins un agent d'hydrofugation et
- d'au moins un oxyde métallique hydrophobe,
l'agent d'hydrofugation étant choisi dans la série des silanes substitués par alkyle de formule générale I 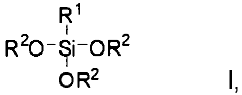
dans laquelle R¹ représente un groupe C₁-C₁₈-alkyle, les groupes R² sont identiques ou différents et R² représente un atome d'hydrogène ou un radical alkyle comprenant 1 à 6 atomes de carbone ; et
dans la série des silicates d'alkyle de formule idéalisée III, 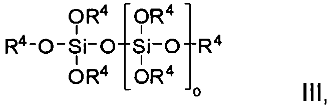
dans laquelle les radicaux R⁴ représentent, indépendamment les uns des autres, un atome d'hydrogène ou un radical alkyle comprenant 1 à 6 atomes de carbone et o représente un nombre de 0 à 50 ;
l'oxyde métallique hydrophobe étant obtenu lorsqu'on traite l'oxyde métallique avec un réactif d'hydrofugation choisi parmi les alkylalcoxysilanes, les alkylalcoxysiloxanes, les silicones, les cires et les huiles ; et
la composition présentant une teneur en au moins un catalyseur d'hydrolyse ou, selon le cas, de condensation de la série des composés complexes des éléments du 3ème et 4ème groupe principal du système périodique des éléments (SPE) ainsi que des groupes secondaires II, III, IV, V, VI, VII et VIIIa, VIIIb et VIIIc du SPE, de la série des sels des éléments du 1er et du 2ème groupe principal du SPE, de la série des alcoolates, de la série des aminoalcools, de la série des acides carboxyliques ou des acides minéraux ou en un mélange d'au moins deux des catalyseurs d'hydrolyse ou, selon le cas, de condensation susmentionnés.

2. Composition selon la revendication 1, **caractérisée en ce que** la composition contient comme autres constituants
- éventuellement au moins un solvant organique,
- éventuellement de l'eau,
- éventuellement au moins un émulsifiant et/ou
- éventuellement d'autres adjuvants.

3. Composition selon l'une quelconque des revendications 1 à 2, **caractérisée en ce que** la composition est à base d'un mélange d'agents d'hydrofugation des formules idéalisées I et/ou III.

4. Composition selon l'une quelconque des revendications 1 à 3, **caractérisée par** une teneur en agent d'hydrofugation de 0,5 à 99,99% en poids, par rapport à la composition.

5. Composition selon l'une quelconque des revendications 1 à 4, **caractérisée par** une teneur en oxyde métallique hydrophobe de 0,01 à 10% en poids, par rapport à la composition.

6. Composition selon l'une quelconque des revendications 1 à 5, **caractérisée par** une teneur en au moins un solvant ou diluant organique de la série des solvants aliphatiques ou aromatiques, des hydrocarbures aliphatiques ou aromatiques présentant un point d'ébullition supérieur à la température ambiante, des solvants polaires aprotiques, des alcools ou, selon le cas, des polyols, des cétones ou en un mélange d'au moins deux des solvants ou, selon le cas, diluants organiques susmentionnés.

7. Composition selon l'une quelconque des revendications 1 à 6, **caractérisée en ce que** ledit au moins un catalyseur d'hydrolyse ou, selon le cas, de condensation est choisi dans la série des titanates ou des zirconates.

8. Composition selon l'une quelconque des revendications 1 à 7, **caractérisée par** une teneur en catalyseur de 0,05 à 5% en poids par rapport à la quantité d'agent d'hydrofugation utilisé.

9. Composition selon l'une quelconque des revendications 1 à 8, **caractérisée par** une teneur en au moins un émulsifiant, choisi parmi les alkylsulfates présentant C₈-C₁₈-alkyle, les alkyléthersulfates et les alkaryléthersulfates présentant C₈-C₁₈-alkyle dans le radical hydrophobe et présentant 1 à 40 unités d'oxyde d'éthylène (OE)- ou, selon le cas, d'oxyde de propylène (OP), les alkylsulfonates présentant C₈-C₁₈-alkyle, les alkarylsulfonates présentant C₈-C₁₈-alkyle, les semi-esters de l'acide sulfosuccinique avec des alcools monovalents ou des alkylphénols comprenant 5 à 15 atomes de carbone, les sels de métal alcalin et d'ammonium d'acides carboxyliques comprenant 8 à 20 atomes de carbone dans le radical alkyle, aryle, alkaryle ou aralkyle, les alkylphosphates et les alkarylphosphates comprenant 8 à 20 atomes de carbone dans le radical organique, les alkylétherphosphates, ou, selon le cas, les alkarylétherphosphates comprenant 8 à 20 atomes de carbone dans le radical alkyle ou, selon le cas, alkaryle et 1 à 40 unités d'OE, les alkylpolyglycoléthers et les alkarylpolyglycoléthers comprenant 8 à 40 unités d'OE et C₈-C₂₀ atomes de carbone dans les radicaux alkyle ou aryle, les copolymères à blocs d'oxyde d'éthylène/oxyde de propylène (OE/OP) comprenant 8 à 40 unités d'OE ou, selon le cas, d'OP, les produits d'addition d'alkylamines présentant des radicaux C₈-C₂₂-alkyle avec de l'oxyde d'éthylène ou de l'oxyde de propylène, les alkylpolyglycosides présentant des radicaux C₈-C₂₄-alkyle linéaires ou ramifiés, saturés ou insaturés et les radicaux oligoglycoside comprenant 1 à 10 unités d'hexose ou de pentose, les tensioactifs à fonctionnalité silicium ou un mélange d'au moins deux des émulsifiants susmentionnés.

10. Composition selon la revendication 9, **caractérisée par** une teneur en émulsifiant de 0,01 à 5% en poids, par rapport au poids total de la composition.

11. Composition selon l'une quelconque des revendications 1 à 10, **caractérisée par** une teneur en au moins un adjuvant choisi dans la série des acides inorganiques ou organiques, des substances tampon, des fongicides, des bactéricides, des algicides, des microbiocides, des parfums, des inhibiteurs de corrosion, des conservateurs, des adjuvants de rhéologie.

12. Procédé pour la préparation d'une composition exempte de fluor selon l'une quelconque des revendications 1 à 11, dans lequel on rassemble
- au moins un agent d'hydrofugation, l'agent d'hydrofugation étant choisi dans la série des silanes substitués par alkyle de formule générale I 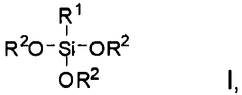 dans laquelle R¹ représente un groupe C₁-C₁₈-alkyle, les groupes R² sont identiques ou différents et R² représente un atome d'hydrogène ou un radical alkyle comprenant 1 à 6 atomes de carbone ; et
de la série des silicates d'alkyle de formule idéalisée III, 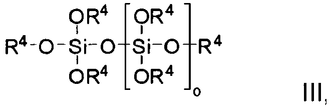 dans laquelle les radicaux R⁴ représentent, indépendamment les uns des autres, un atome d'hydrogène ou un radical alkyle comprenant 1 à 6 atomes de carbone et o représente un nombre de 0 à 50 ; et
- au moins un oxyde métallique hydrophobe, l'oxyde métallique hydrophobe étant obtenu lorsqu'on traite l'oxyde métallique avec un réactif d'hydrofugation choisi parmi les alkylalcoxysilanes, les alkylalcoxysiloxanes, les silicones, les cires et les huiles ;
dans un appareil de mélange et on mélange de manière continue ou discontinue avec
- au moins un catalyseur d'hydrolyse ou de condensation de la série des composés complexes des éléments du 3ème et 4ème groupe principal du système périodique des éléments (SPE) ainsi que des groupes secondaires II, III, IV, V, VI, VII et VIIIa, VIIIb et VIIIc du SPE, de la série des sels des éléments du 1er et du 2ème groupe principal du SPE, de la série des alcoolates, de la série des aminoalcools, de la série des acides carboxyliques ou des acides minéraux ou avec un mélange d'au moins deux des catalyseurs d'hydrolyse ou, selon le cas, de condensation susmentionnés.
- éventuellement de l'eau,
- éventuellement au moins un solvant organique,
- éventuellement au moins un émulsifiant et
- éventuellement au moins un autre adjuvant.

13. Utilisation d'une composition selon l'une quelconque des revendications 1 à 11 ou d'une composition préparée selon le procédé selon la revendication 12 pour hydrofuger des substrats minéraux poreux et pour générer un effet perlant sur la surface traitée du substrat, une ou plusieurs gouttes d'eau, qui restent pendant un laps de 1 minute sur la surface traitée du substrat ne laissant pas de taches d'humidité.
